# EUROPÄISCHE PATENTSCHRIFT

(11) **EP 3 252 424 B1**
(45) Veröffentlichungstag und Bekanntmachung des Hinweises auf die Patenterteilung: **07.08.2019**
(21) Anmeldenummer: 17000427.9
(22) Anmeldetag: 15.03.2017
(51) Int. Cl.: F41H 5/26, G02B 1/14, G02B 23/08

(54) **WINKELSPIEGEL FÜR EIN GEPANZERTES FAHRZEUG**
PERISCOPE FOR AN ARMOURED VEHICLE
ÉPISCOPE POUR VÉHICULE BLINDÉ

(30) Priorität: 02.06.2016 DE 202016102941 U
(43) Veröffentlichungstag der Anmeldung: 06.12.2017
(73) Patentinhaber: GuS Periscopes GmbH & Co. KG, 32312 Lübbecke (DE)
(72) Erfinder: Krätzig, Olaf, 32289 Rödinghausen (DE); Fribus, Wladislaw, 32339 Espelkamp (DE)
(74) Vertreter: Rolf, Gudrun

(56) Entgegenhaltungen:
- WO-A2-2009/039798
- DE-A1- 3 151 226
- DE-A1-102010 017 613
- DE-A1-102012 103 098
- DE-U1-202006 004 546

## Beschreibung

Die Erfindung betrifft einen Winkelspiegel für ein gepanzertes Fahrzeug, aus einem Gehäuse mit einem unteren Einblick und einem oberen Ausblick und einem darin befindlichen ein- oder mehrteiligen Prisma mit einer Ausblickfläche.

Aus der DE 28 10 206 A1 ist ein solcher Winkelspiegel für gepanzerte Fahrzeuge bekannt, der vor der Ausblickfläche des Prismas mit einer Silikatglasscheibe ausgestattet ist.

Nachteilig an einer solchen Ausgestaltung ist, dass eine solche Silikatglasscheibe bei dem Einsatz eines damit ausgestatteten Fahrzeuges in wüstenreichen Landstrichen von feinen Sandpartikeln auf Dauer matt geschliffen werden können, sodass die Winkelspielgel unbrauchbar werden.

Bekannt ist des Weiteren ein Winkelspiegel für Panzerfahrzeuge, DE 20 2006 004 546 U1, der vor der Lichteintrittsfläche eines Prismenblockes mit einer Scheibenheizung ausgestattet ist, die zwar eine äußere Abschlussscheibe aus einem Borosilikatglas besitzt, welches als Silikatglas aber ebenfalls von sandstaubhaltigen Umgebungsbedingungen auf Dauer mattiert werden kann.

Aufgabe der Erfindung ist es, einen Winkelspiegel zur Verfügung zu stellen, der auch in stark sandhaltiger Umgebung dauerhaft funktionstüchtig bleibt.

Die Lösung dieser Aufgabe erfolgt in Verbindung mit den Merkmalen des Oberbegriffs des ersten Schutzanspruches insbesondere im Zusammenspiel mit dessen kennzeichnenden Merkmalen dadurch, dass im Ausblick des Winkelspiegels eine Schicht aus durchsichtiger Keramik angeordnet ist.

Eine solche durchsichtige Keramik weist neben einer hohen relativen Transparenz eine mehrfach höhere Härte und Festigkeit gegenüber üblichem Silikatglas auf, ebenso wie eine sehr hohe thermische Belastbarkeit und chemische Beständigkeit wie ein etwa um 30% leichteres Gewicht gegenüber Panzerglas.

Mit einer solchen Schicht aus durchsichtiger Keramik lässt sich der Winkelspiegel also vor Abrasion schützen, ebenso wie vorteilhaft ist, dass durch die große Härte und Festigkeit auch der dahinterliegende Aufbau des Winkelsiegels hervorragend gegen Schläge geschützt ist. Transparente Keramik hat sich als überaus robuster Werkstoff für raue Umgebungen herausgestellt, sodass die im Ausblick angeordnete Schicht aus durchsichtiger Keramik eine hervorragende verschleißresistente Scheibe darstellt.

Weitere vorteilhafte Ausgestaltungen des Gegenstandes der Erfindung ergeben sich aus den nachfolgenden Unteransprüchen.

Eine solche Schicht kann beispielsweise aus einer einzelnen Keramikkachel oder auch aus mehreren nebeneinander angeordneten Keramikkacheln bestehen, wobei eventuelle Fugen zwischen mehreren Keramikkacheln und Stoßkanten über eine Klebetechnik vollkommen unsichtbar ausgeführt sein können. Die Schicht aus durchsichtiger Keramik wird besonders bevorzugt als äußerste Schicht von auf der Ausblickfläche des Prismas angeordneten Schichten angeordnet, sodass darunterliegende Schichten weitgehend von Schlägen und vollständig von Abrasion geschützt sind. Solche weitere Schichten können Strahlenschutzschichten oder auch Scheibenheizungen sein, wobei solche Schichten mittels einer durchsichtigen Klebefolie oder einem durchsichtigem Kleber auf die Aussichtsfläche des Prismas oder auf weitere Funktionsschichten aufgebracht werden können.

Entsprechend einer anderen vorteilhaften Ausführungsform der Erfindung ist die Schicht aus durchsichtiger Keramik beabstandet vom Prisma im Gehäuse selber festgelegt, sodass es auch möglich wird, durch einfachen Austausch der oberen Gehäusehälfte bereits verbaute Winkelspiegel mit einer verschleißresistenten Scheibe im Ausblick nachzurüsten.

Die Schicht aus durchsichtiger Keramik besteht im Wesentlichen aus Aluminiumoxid wie etwa Al₂O₃ oder auch aus einem Magnesiumaluminat wie MgAl₂O₄ (Spinell), wobei dieses Material den weiteren Vorteil mit sich bringt, infrarotdurchlässig zu sein und bei einer Ausführung aus einem Sinterkorund weiterhin keine Eigenschaft einer Rissausbreitung nach einer Schädigung aufweist, sodass auch nach einer solchen Schädigung die Funktion des Winkelspiegels benachbart der Schädigung weiter aufrechterhalten bleibt.

Nachfolgend ist ein Ausführungsbeispiel der Erfindung anhand von Zeichnungen näher beschrieben. Es zeigen:
Fig. 1 eine Vorderansicht eines Winkelspiegels, und
Fig. 2 eine teilweise geschnittene Seitenansicht des Winkelspiegels gemäß Fig. 1.

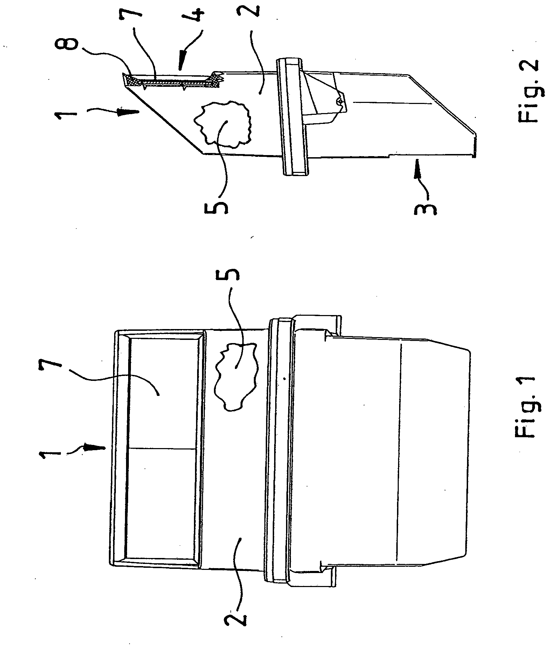

Der Winkelspiegel 1 für ein gepanzertes Fahrzeug besteht aus einem Gehäuse 2 mit einem unteren Einblick 3 und einem oberen Ausblick 4 und einem darin befindlichen ein- oder mehrteiligen Prisma 5 mit einer Ausblickfläche, vor der eine Schicht 7 aus durchsichtiger Keramik angeordnet ist, wobei, wie in Fig. 1 dargestellt, die Schicht 7 aus zwei nebeneinander angeordneten Keramikkacheln besteht. Die Anordnung einteiliger Schichten oder von mehreren hintereinander angeordneten Schichten aus durchsichtiger Keramik ist ebenfalls möglich, aber zeichnerisch nicht dargestellt. Die Schicht 7 aus durchsichtiger Keramik besteht beispielsweise aus Aluminiumoxid, wie Al₂O₃ oder aus einem Magnesiumaluminat, wie MgAl₂O₄.

Die Schicht 7 aus durchsichtiger Keramik ist unmittelbar auf der Ausblickfläche des Prismas 5 angeordnet, wobei die Verbindung mittels einer durchsichtigen Klebefolie oder einem durchsichtigen Kleber direkt auf das Prisma 5 oder auf weitere zwischengeschaltete Funktionsschichten erfolgen kann, wie dies zeichnerisch nicht dargestellt ist.

Zeichnerisch ebenfalls nicht dargestellt ist eine Schicht die beabstandet vom Prisma im Gehäuse 1 festgelegt ist.

## Patentansprüche

1. Winkelspiegel für ein gepanzertes Fahrzeug, aus einem Gehäuse (2) mit einem unteren Einblick (3) und einem oberen Ausblick (4) und einem darin befindlichen ein- oder mehrteiligen Prisma (5) mit einer Ausblickfläche, **dadurch gekennzeichnet, dass** im Ausblick (4) eine Schicht (7) aus durchsichtiger Keramik angeordnet ist.

2. Winkelspiegel nach Anspruch 1, **dadurch gekennzeichnet, dass** die Schicht (7) aus einer Keramikkachel oder aus mehreren nebeneinander angeordneten Keramikkacheln besteht.

3. Winkelspiegel nach einem der vorgenannten Ansprüche, **dadurch gekennzeichnet, dass** die Schicht (7) als äußerste Schicht auf die Ausblickfläche des Prismas (5) angeordnet ist.

4. Winkelspiegel nach Anspruch 3, **dadurch gekennzeichnet, dass** die Schicht (7) mittels einer durchsichtigen Klebefolie oder einem durchsichtigem Kleber auf der Ausblickfläche des Prismas (5) oder auf darauf aufgebrachten weiteren Funktionsschichten aufgebracht ist.

5. Winkelspiegel nach Anspruch 1 oder 2, **dadurch gekennzeichnet, dass** die Schicht (7) beabstandet vom Prisma im Gehäuse (1) festgelegt ist.

6. Winkelspiegel nach einem der vorgenannten Ansprüche, **dadurch gekennzeichnet, dass** die Schicht (7) aus Aluminiumoxid, wie Al₂O₃, oder einem Magnesiumaluminat, wie MgAl₂O₄ (Spinell), besteht.

## Claims

1. Periscope for an armoured vehicle, comprising a housing (2) with a lower look-in window (3) and an upper look-out window (4), and a one-piece or multi-piece prism (5) located therein and having a look-out surface, **characterized in that** a layer (7) of transparent ceramic is arranged in the look-out window (4).

2. Periscope according to Claim 1, **characterized in that** the layer (7) consists of a ceramic tile or of multiple ceramic tiles arranged beside one another.

3. Periscope according to one of the preceding claims, **characterized in that** the layer (7) is arranged as an outermost layer on the look-out surface of the prism (5).

4. Periscope according to Claim 3, **characterized in that** the layer (7) is applied by means of a transparent adhesive film or a transparent adhesive to the look-out surface of the prism (5) or to further functional layers applied thereto.

5. Periscope according to Claim 1 or 2, **characterized in that** the layer (7) is fixed in the housing (1) at a distance from the prism.

6. Periscope according to one of the preceding claims, **characterized in that** the layer (7) consists of aluminium oxide, such as Al₂O₃, or a magnesium aluminate, such as MgAl₂O₄ (spinel).

## Revendications

1. Rétroviseur angulaire pour un véhicule blindé, composé d'un boîtier (2) ayant un oeilleton inférieur (3) et un viseur supérieur (4) ainsi qu'un prisme (5) en une ou plusieurs parties, se trouvant dans celui-ci, muni d'une surface de viseur, **caractérisé en ce qu'**une couche (7) constituée d'une céramique transparente est disposée dans le viseur (4).

2. Rétroviseur angulaire selon la revendication 1, **caractérisé en ce que** la couche (7) se compose d'un carreau en céramique ou de plusieurs carreaux en céramique disposés les uns à côté des autres.

3. Rétroviseur angulaire selon l'une des revendications précédentes, **caractérisé en ce que** la couche (7) est disposée sur la surface de viseur du prisme (5) en tant que couche la plus à l'extérieur.

4. Rétroviseur angulaire selon la revendication 3, **caractérisé en ce que** la couche (7) est appliquée sur la surface de viseur du prisme (5), ou sur des couches de fonction supplémentaires appliquées sur celle-ci, au moyen d'un film adhésif transparent ou d'une colle transparente.

5. Rétroviseur angulaire selon la revendication 1 ou 2, **caractérisé en ce que** la couche (7) est fixée dans le boîtier (1) de manière espacée du prisme.

6. Rétroviseur angulaire selon l'une des revendications précédentes, **caractérisé en ce que** la couche (7) se compose d'oxyde d'aluminium, comme de l'Al₂O₃, ou d'un stratifié de magnésium, comme le MgAl₂O₄ (spinelle).
